# EUROPEAN PATENT APPLICATION

(11) **EP 4 456 226 A1**
(43) Date of publication of application: **30.10.2024**
(21) Application number: 23787505.9
(22) Date of filing: 28.03.2023
(51) Int. Cl.: H01M 10/04, H01M 50/682

(54) **BATTERY CELL, BATTERY AND ELECTRIC DEVICE**

(30) Priority: 15.04.2022 CN 202210396262
(71) Applicant: Contemporary Amperex Technology (Hong Kong) Limited, Central, Central And Western District (HK)
(72) Inventor: HE, Jianfu, Ningde, Fujian 352100 (CN); LIU, Qian, Ningde, Fujian 352100 (CN); YE, Yonghuang, Ningde, Fujian 352100 (CN); ZHANG, Tao, Ningde, Fujian 352100 (CN); JIN, Haizu, Ningde, Fujian 352100 (CN)
(74) Representative: Holt, Lucy Rose
(86) International application number: PCT/CN2023/084446
(87) International publication number: WO 2023/197859

(57) **Abstract**

Provided are a battery cell, a battery and an electric device. The battery cell comprises: a housing; an electrode assembly, which is accommodated in the housing; and a buffer piece, which is accommodated in the housing and connected to the electrode assembly, and is used for buffering an expansion of the electrode assembly, wherein the buffer piece comprises a first closed hole, and the volume V1 of the first closed hole and the volume V of the buffer piece satisfy: V1/V > 10%. By means of the technical scheme of the present application, the performance of a battery can be improved.

## Description

### Cross-Reference to Related Application

The present application claims priority to Chinese Patent Application No. 202210396262.9, entitled "BATTERY CELL, BATTERY, AND POWER CONSUMING DEVICE", filed on April 15, 2022, which is incorporated herein by reference in its entirety.

### Technical Field

The present application relates to the technical field of batteries, and in particular to a battery cell, a battery, and a power consuming device.

### Background Art

Energy conservation and emission reduction are the key to the sustainable development of the automobile industry. In this context, electric vehicles play an important part in the sustainable development of the automobile industry because of their advantages in energy conservation and environmental protection. Further, for the electric vehicles, the battery technology is an important factor to their development.

The space utilization, strength, and long-term charge and discharge performance of battery cells are critical to the performance of batteries. Therefore, how to improve the performance of a battery is an urgent problem to be solved.

### Summary of the Invention

Embodiments of the present application provide a battery cell, a battery, and a power consuming device, which can improve the performance of the battery.

In a first aspect, an embodiment of the present application provides a battery cell, including: a shell; an electrode assembly accommodated in the shell; and a buffer member, which is accommodated in the shell and connected to the electrode assembly and is configured to buffer expansion of the electrode assembly, wherein the buffer member includes first closed pores, and the volume V1 of the first closed pores and the volume V of the buffer member meet a formula of V1/V > 10%.

In the embodiment of the present application, the battery cell includes the shell, and the electrode assembly and the buffer member which are accommodated in the shell. The buffer member is accommodated in the shell and connected to the electrode assembly, and is configured to buffer expansion of the electrode assembly. The electrode assembly may exert pressure on the buffer member during expansion, and the buffer member may exert a reverse force onto the electrode assembly after being compressed. Under the action the buffer member, the surface of the electrode assembly in contact with the buffer member is uniformly stressed, and the stress on this surface changes uniformly throughout the process, which is thus conductive to achieving uniform release of the expansion force of the electrode assembly, thereby reducing polarization accumulation of the electrode assembly. Also, since the buffer member is arranged inside the battery cell, in case of the battery having a constant internal space, the space of the buffer member originally provided between the battery cells in the battery can be assigned to internal spaces of the battery cells, which can improve the space utilization of the battery cells. The buffer member includes the first closed pores, and the volume V1 of the first closed pores and the volume V of the buffer member meet a formula of V1/V > 10%. The first closed pores are not in contact with an electrolyte solution in the battery cell, which can reduce the absorption of the electrolyte solution by the buffer member; and providing the first closed pores is also conductive to reducing the mass of the buffer member and improving the mass energy density of the battery. In this way, in one aspect, it is possible to avoid the occurrence of insufficient lithium intercalation, lithium precipitation, etc. in a local region of a negative electrode to a certain extent caused by insufficient free electrolyte solution inside the battery cell; in another aspect, it is possible to avoid to a certain extent the increase in the weight of the battery cell caused by the need to add additional electrolyte solution due to insufficient free electrolyte solution, which can not only increase the energy density of the battery, but also save space to accommodate the gas generated during the use of the battery cell; and in yet another aspect, the first closed pores are not in contact with the electrolyte solution, so that it is possible to reduce the area of reaction between the buffer member and the electrolyte solution, which can reduce side reactions, avoid damage to the buffer member to a certain extent, and improve the buffering effect of the buffer member. Therefore, the performance of the battery can be improved with the technical solution of the embodiment of the present application.

In a possible implementation, the volume V1 of the first closed pores and the volume V of the buffer member also meet a formula of V1/V ≥ 30%. In this way, it is possible to further reduce the absorption of the electrolyte solution by the buffer member, and also reduce the weight of the buffer member and in turn improve the energy density of the battery.

In a possible implementation, the volume V1 of the first closed pores and the volume V of the buffer member also meet a formula of (V1 + V2)/V ≥ 50%, where V2 is the volume of a material of the buffer member. In this way, the ratio of the volume of an orifice in the buffer member to the volume of the buffer member is less than 50%, which can further reduce the absorption of the electrolyte solution by the orifice.

In a possible implementation, the buffer member includes a first layer and a second layer, the first layer being closer to the electrode assembly than the second layer, and a first density of the first layer being greater than a second density of the second layer. By providing the buffer member with differentiated densities, both the demand of the buffer member for the weight and the demand of the electrode assembly for the electrolyte solution can be satisfied.

In a possible implementation, the first density ρ1 and the second density ρ2 meet a formula of ρ1/ρ2 ≥ 1.05. In this way, the ratio of the first density ρ1 to the second density ρ2 is within a reasonable range, and there is a significant density difference between the first layer and the second layer of the buffer member, which can better satisfy the demand of the buffer member for the weight and the demand of the electrode assembly for the electrolyte solution.

In a possible implementation, a volume ratio of the first closed pores in the first layer to the first layer is greater than a volume ratio of the first closed pores in the second layer to the second layer. In this way, the amount of the electrolyte solution absorbed by the first layer is less than the amount of the electrolyte solution absorbed by the second layer, and the second layer may release more electrolyte solution after being compressed so as to further meet the demand of the electrode assembly for the electrolyte solution.

In a possible implementation, the second layer is arranged between the two first layers. In this way, force is applied more uniformly throughout the buffer member, which facilitates uniform release of the electrolyte solution.

In a possible implementation, a surface of the buffer member is provided with a protective layer. This can reduce the risk of damage to the outer surface of the buffer member.

In a possible implementation, the protective layer is arranged on a first surface and a second surface of the buffer member, the first surface and the second surface being surfaces arranged opposite to each other in a thickness direction of the buffer member. The first surface and the second surface are the surfaces of the buffer member having the largest surface area, and providing the protective layer on the first surface and the second surface is simple in process and convenient to operate.

In a possible implementation, the protective layer is arranged on a third surface and a fourth surface of the buffer member, the third surface and the fourth surface being surfaces arranged opposite to each other in a direction perpendicular to the thickness direction of the buffer member, and the third surface and the fourth surface being both connected to the first surface and the second surface. In this way, the buffer member can be fully protected, achieving a better protective effect.

In a possible implementation, the protective layer has a thickness of 1 µm to 5000 µm. In this way, both the production cost and the internal space utilization of the battery cell can be satisfied.

In a possible implementation, the thickness d1 of the protective layer and the thickness d2 of the buffer member meet a formula of d1/(d1 + d2) ≤ 50%. This can reduce the risk of weakening the buffering effect of the buffer member caused by an excessive thickness of the protective layer.

In a possible implementation, the protective layer is a coating layer coated onto a surface of the buffer member. The coating layer is conductive to preventing the gas from escaping from the inside of the buffer member, and is also conductive to isolating the buffer member from corrosion by the electrolyte solution.

In a possible implementation, a wetting force r1 between a surface of the buffer member provided with no coating layer and the electrolyte solution, and the wetting force r2 between the coating layer and the electrolyte solution meet a formula of r1/r2 ≥ 1.02, where r2 = L2/2, r1 = L1/2, L1 is a diffusion distance of the electrolyte solution on the surface of the buffer member provided with no coating layer within a preset time, and L2 is a diffusion distance of the electrolyte solution on the coating layer within the preset time. In this way, due to the poor wetting force between the coating layer and the electrolyte solution, the ability of the buffer member to absorb the electrolyte solution can be reduced, which reduces the occurrence of insufficient lithium intercalation, lithium precipitation, etc. in a local region of a negative electrode caused by insufficient electrolyte solution.

In a possible implementation, the protective layer is a protective shell surrounding the buffer member.

In a possible implementation, the thickness d3 of the protective shell and the thickness d1 of the buffer member meet a formula of d3/d1 ≤ 50%. This can reduce the risk of reducing the buffering effect of the buffer member and the risk of reducing the internal space utilization of the battery cell caused by the excessive thickness of the protective shell.

In a possible implementation, the protective shell includes second closed pores, and the volume V3 of the second closed pores and the volume V4 of the protective shell meet a formula of V3/V4 ≥ 90%. This is conducive to forming a closed space inside the protective shell, which further reduces or even avoids absorption of the electrolyte solution by the buffer member.

In a possible implementation, the buffer member is arranged between the electrode assembly and the shell, and/or, the buffer member is arranged between the adjacent electrode assemblies. In this way, the position and number of the buffer member can be flexibly set according to actual needs.

In a second aspect, an embodiment of the present application provides a battery, including: a battery cell in the first aspect or in any possible implementation of the first aspect; and a case configured to accommodate the battery cell.

In a third aspect, an embodiment of the present application provides a power consuming device, including a battery in the second aspect or in any possible implementation of the second aspect.

In a fourth aspect, an embodiment of the present application provides a method for manufacturing a battery cell, the method including: providing a shell; providing an electrode assembly, the electrode assembly being accommodated in the shell; and providing a buffer member, the buffer member being accommodated in the shell and connected to the electrode assembly, and the buffer member being configured to buffer expansion of the electrode assembly, wherein the buffer member includes first closed pores, and the volume V1 of the first closed pores and the volume V of the buffer member meet a formula of V1/V > 10%.

In a fifth aspect, an embodiment of the present application provides a device for manufacturing a battery, the device including: a first provision module configured to provide a shell; a second provision module configured to provide an electrode assembly, the electrode assembly being accommodated in the shell; and a third provision module configured to provide a buffer member, the buffer member being accommodated in the shell and connected to the electrode assembly, and the buffer member being configured to buffer expansion of the electrode assembly, wherein the buffer member includes first closed pores, and the volume V1 of the first closed pores and the volume V of the buffer member meet a formula of V1/V > 10%.

In the embodiment of the present application, the battery cell includes the shell, and the electrode assembly and the buffer member which are accommodated in the shell. The buffer member is accommodated in the shell and connected to the electrode assembly, and is configured to buffer expansion of the electrode assembly. The electrode assembly may exert pressure on the buffer member during expansion, and the buffer member may exert a reverse force onto the electrode assembly after being compressed. Under the action the buffer member, the surface of the electrode assembly in contact with the buffer member is uniformly stressed, and the stress on this surface changes uniformly throughout the process, which is thus conductive to achieving uniform release of the expansion force of the electrode assembly, thereby reducing polarization accumulation of the electrode assembly. Also, since the buffer member is arranged inside the battery cell, in case of the battery having a constant internal space, the space of the buffer member originally provided between the battery cells in the battery can be assigned to internal spaces of the battery cells, which can improve the space utilization of the battery cells. The buffer member includes the first closed pores, and the volume V1 of the first closed pores and the volume V of the buffer member meet a formula of V1/V > 10%. The first closed pores are not in contact with an electrolyte solution in the battery cell, which can reduce the absorption of the electrolyte solution by the buffer member; and also, providing the first closed pores is also conductive to reducing the mass of the buffer member and improving the mass energy density of the battery. In this way, in one aspect, it is possible to reduce the occurrence of insufficient lithium intercalation, lithium precipitation, etc. in a local region of a negative electrode to a certain extent caused by insufficient free electrolyte solution inside the battery cell; in another aspect, it is possible to avoid the increase in the weight of the battery cell to a certain extent caused by the need to add additional electrolyte solution due to insufficient free electrolyte solution, which can not only ensure the energy density of the battery, but also save space to accommodate the gas generated during the use of the battery cell; and in yet another aspect, the first closed pores are not in contact with the electrolyte solution, so that it is possible to reduce the area of reaction between the buffer member and the electrolyte solution, which can reduce side reactions, avoid damage to the buffer member to a certain extent, and ensure the buffering effect of the buffer member. Therefore, the performance of the battery can be improved with the technical solution of the embodiment of the present application.

### Brief Description of the Drawings

To describe the technical solutions of the embodiments of the present application more clearly, the drawings required in the embodiments of the present application will be described briefly below. Obviously, the drawings illustrated below merely show some embodiments of the present application, and for those of ordinary skill in the art, other drawings can be obtained on the basis of these drawings without any creative efforts.
FIG. 1 is a schematic diagram of a vehicle according to an embodiment of the present application;
FIG. 2 is a schematic diagram of a battery according to an embodiment of the present application;
FIG. 3 is a schematic diagram of a battery cell according to an embodiment of the present application;
FIG. 4 is a schematic diagram of a battery cell according to an embodiment of the present application;
FIG. 5 is a schematic diagram of a buffer member according to an embodiment of the present application;
FIG. 6 is a schematic diagram of a buffer member provided with a protective layer according to an embodiment of the present application;
FIG. 7 is a schematic diagram of a buffer member provided with a protective layer according to an embodiment of the present application;
FIG. 8 is a schematic diagram of a buffer member provided with a protective shell according to an embodiment of the present application;
FIG. 9 is a schematic diagram of a battery cell according to an embodiment of the present application;
FIG. 10 is a schematic diagram of a battery cell according to an embodiment of the present application;
FIG. 11 is a schematic diagram of a battery cell according to an embodiment of the present application;
FIG. 12 is a schematic diagram of a battery cell according to an embodiment of the present application.

In the drawings, the figures are not drawn to scale.

### Detailed Description of Embodiments

The technical solutions of the embodiments of the present application will be described below with reference to the drawings. The following detailed description of the embodiments and the drawings are used to illustrate the principle of the present application by way of example and are not intended to limit the scope of the present application. That is, the present application is not limited to the described embodiments.

In the description of the present application, it should be noted that "a plurality of" means two or more, unless otherwise specified. The orientation or position relationship indicated by the terms "upper", "lower", "left", "right", "inner", "outer", etc. is only for the convenience of describing the present application and simplifying the description, rather than indicating or implying that the apparatus or element referred to must have a particular orientation or be constructed and operated in a particular orientation, and therefore should not be construed as a limitation on the present application. In addition, the terms such as "first", "second" and "third" are merely for descriptive purposes, and should not be construed as indicating or implying the relative importance. The term "perpendicular" does not mean being perpendicular in the strict sense, but within an allowable range of tolerance. The term "parallel" does not mean being parallel in the strict sense, but within an allowable range of tolerance. The orientation terms in the following description all indicate directions shown in the drawings, but do not limit the specific structure in the present application. In the description of the present application, it should also be noted that the terms "mount", "couple" and "connect" should be interpreted in a broad sense. For example, the connection may be a fixed connection, a detachable connection or an integral connection; or may be a direct connection, or may be an indirect connection by means of an intermediate medium. For those of ordinary skill in the art, the specific meanings of the foregoing terms in the present application can be construed according to specific circumstances.

The term "and/or" in the present application is merely intended to describe the associated relationship of associated objects, indicating that three relationships may exist. For example, A and/or B, may be indicate: only A exists, both A and B exist, and only B exists. In addition, the character "/" in the present application generally indicates an "or" relationship between the associated objects.

In the embodiments of the present application, the same reference numerals denote the same components, and for the sake of brevity, the detailed description of the same components is omitted in different embodiments. It should be understood that the dimensions, such as thickness, length and width, of the various components in the embodiments of the present application illustrated in the drawings, as well as the dimensions, such as an overall thickness, length and width, of an integrated apparatus are merely illustrative and should not be construed as any limitation on the present application. The phrase "a plurality of" appearing in the present application means two or more (including two).

In the present application, a battery cell may include a lithium-ion secondary battery, a lithium-ion primary battery, a lithium-sulfur battery, a sodium/lithium-ion battery, a sodium-ion battery or a magnesium-ion battery, etc., which will not be limited in the embodiments of the present application. The battery cell may be cylindrical, flat, cuboid or in another shape, which will also not be limited in the embodiments of the present application. The battery cells are generally classified into three types depending on the way of package: cylindrical battery cells, prismatic battery cells and pouch battery cells, which will also not be limited in the embodiments of the present application.

A battery mentioned in the embodiments of the present application refers to a single physical module including one or more battery cells to provide a higher voltage and capacity. For example, the battery mentioned in the present application may include a battery module, a battery pack, etc. The battery generally includes a case for packaging one or more battery cells. The case can prevent liquid or other foreign matters from affecting charging or discharging of the battery cell(s).

The battery cell includes an electrode assembly and an electrolyte solution. The electrode assembly is composed of a positive electrode plate, a negative electrode plate, and a separator. The operation of the battery cell mainly relies on the movement of metal ions between the positive electrode plate and the negative electrode plate. The positive electrode plate includes a positive current collector and a positive active material layer. The positive active material layer is coated on a surface of the positive current collector, and the current collector not coated with the positive active material layer protrudes from the current collector coated with the positive active material layer and serves as a positive electrode tab. Taking a lithium ion battery as an example, the positive current collector may be made of aluminum, and the positive active material may be lithium cobalt oxide, lithium iron phosphate, ternary lithium, lithium manganate, etc. The negative electrode plate includes a negative current collector and a negative active material. The negative active material is coated on a surface of the negative current collector, and the current collector not coated with the negative active material protrudes from the current collector coated with the negative active material and serves as a negative electrode tab. The negative electrode current collector may be made of copper, and the negative electrode active material may be carbon, silicon, etc. In order to ensure that no fusing occurs when a large current passes, a plurality of positive electrode tabs are provided and are stacked together, and a plurality of negative electrode tabs are provided and are stacked together. The separator may be made of polypropylene, polyethylene, etc. In addition, the electrode assembly may be of a wound structure or a laminated structure, which will not be limited in the embodiments of the present application.

The battery may include a plurality of battery cells in order to meet different power demands, with the plurality of battery cells being in series connection, parallel connection or series-parallel connection. The series-parallel connection refers to a combination of series connection and parallel connection. Optionally, the plurality of battery cells may be first connected in series, in parallel or in series-parallel to form battery modules, and then the multiple battery modules are connected in series, in parallel or in series-parallel to form a battery. That is, the plurality of battery cells may directly form a battery, or may form battery modules that may then form a battery. The battery is further arranged in a power consuming device to supply electric energy to the power consuming device.

For development of the battery technology, various design factors should be considered at the same time, such as energy density, cycling life, discharge capacity, charge-discharge rates and safety, etc. A buffer member in the battery is usually arranged between the battery cells to buffer the battery cells, but this arrangement is complicated to assemble and is not conducive to improving the internal space utilization of the battery. If the buffer member is arranged inside the battery cell, the buffer member can absorb the electrolyte solution in the battery cell and react with the electrolyte solution, which may cause various safety problems and also reduce the energy density of the battery, thereby affecting the performance of the battery. Thus, providing battery cell is critical to the performance of a battery. Therefore, how to provide a battery cell to improve the performance of a battery is an urgent technical problem to be solved.

In view of this, an embodiment of the present application provides a battery cell, including a shell, and an electrode assembly and a buffer member which are accommodated in the shell. The buffer member is accommodated in the shell and connected to the electrode assembly, and is configured to buffer expansion of the electrode assembly. The electrode assembly may exert pressure on the buffer member during expansion, and the buffer member may exert a reverse force onto the electrode assembly after being compressed. Under the action the buffer member, the surface of the electrode assembly in contact with the buffer member is uniformly stressed, and the stress on this surface changes uniformly throughout the process, which can achieve uniform release of the expansion force of the electrode assembly, thereby reducing polarization accumulation of the electrode assembly. Also, since the buffer member is arranged inside the battery cell, in case of the battery having a constant internal space, the space of the buffer member originally provided between the battery cells in the battery can be assigned to internal spaces of the battery cells, which can improve the space utilization of the battery cells. The buffer member includes the first closed pores, and the volume V1 of the first closed pores and the volume V of the buffer member meet a formula of V1/V > 10%. The first closed pores are not in contact with an electrolyte solution in the battery cell, which can reduce the absorption of the electrolyte solution by the buffer member; and also, providing the first closed pores is also conductive to reducing the mass of the buffer member and improving the mass energy density of the battery. In this way, in one aspect, it is possible to avoid the occurrence of insufficient lithium intercalation, lithium precipitation, etc. in a local region of a negative electrode to a certain extent caused by insufficient free electrolyte solution inside the battery cell; in another aspect, it is possible to avoid the increase in the weight of the battery cell to a certain extent caused by the need to add additional electrolyte solution due to insufficient free electrolyte solution, which can not only ensure the energy density of the battery, but also save space to accommodate the gas generated during the use of the battery cell; and in yet another aspect, the first closed pores are not in contact with the electrolyte solution, so that it is possible to reduce the area of reaction between the buffer member and the electrolyte solution, which can reduce side reactions, avoid damage to the buffer member to a certain extent, and ensure the buffering effect of the buffer member. Therefore, the performance of the battery can be improved with the technical solution of the embodiment of the present application.

The technical solution described in the embodiments of the present application are all applicable to various devices using batteries, such as mobile phones, portable devices, laptops, electromobiles, electric toys, electric tools, electric vehicles, ships and spacecrafts. For example, the spacecrafts include airplanes, rockets, space shuttles, space vehicles, etc.

It should be understood that the technical solutions described in the embodiments of the present application are not only applicable to the devices described above, but also applicable to all devices using batteries. However, for the sake of brevity of description, the following embodiments will be described by taking an electric vehicle as an example.

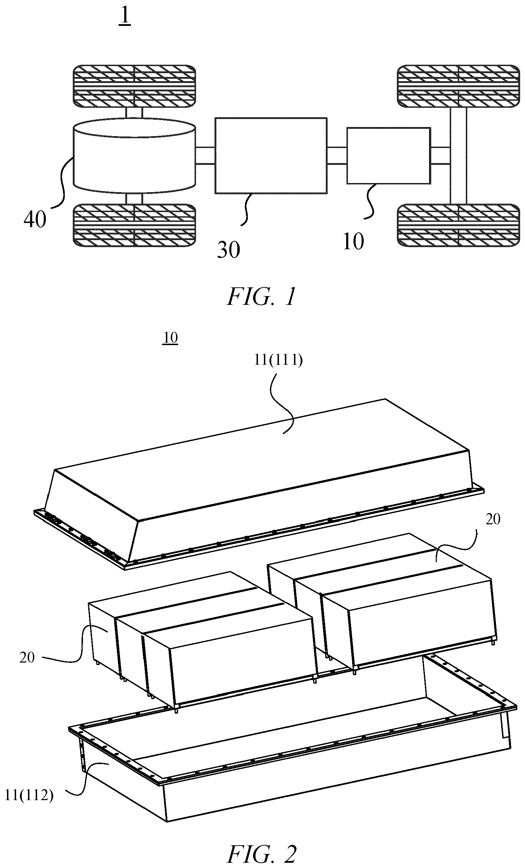

For example, FIG. 1 shows a schematic structural diagram of a vehicle 1 according to an embodiment of the present application. The vehicle 1 may be a fuel vehicle, a gas vehicle, or a new-energy vehicle. The new-energy vehicle may be a battery electric vehicle, a hybrid vehicle, an extended-range vehicle, etc. The vehicle 1 may be internally provided with a motor 40, a controller 30 and a battery 10. The controller 30 is used for controlling the battery 10 to supply power to the motor 40. For example, the battery 10 may be arranged at the bottom, the head, or the tail of the vehicle 1. The battery 10 may be configured to supply power to the vehicle 1. For example, the battery 10 may serve as a power source for operating the vehicle 1 for use in a circuit system of the vehicle 1, for example, to satisfy the working power demand of the vehicle 1 during startup, navigation and running. In another embodiment of the present application, the battery 10 may not only serve as a power source for operating the vehicle 1, but may also serve as a power source for driving the vehicle 1, instead of or partially instead of fuel or natural air, to provide driving power for the vehicle 1.

The battery 10 may include a plurality of battery cells in order to meet different power demands. For example, FIG. 2 shows a schematic structural diagram of a battery 10 according to an embodiment of the present application. The battery 10 may include a plurality of battery cells 20. The battery 10 may further include a case 11. The case 11 has a hollow structure inside, and the plurality of battery cells 20 are accommodated inside the case 11. For example, the plurality of battery cells 20 are in parallel connection, in series connection or in series-parallel connection, and then are placed inside the case 11.

Optionally, the battery 10 may further include other structures, which will not be described in detail herein. For example, the battery 10 may further include a bus component. The bus component is configured to achieve an electrical connection, such as parallel connection, series connection, or series-parallel connection, between the plurality of battery cells 20. Specifically, the bus component may achieve an electrical connection between the battery cells 20 by connecting electrode terminals of the battery cells 20. Further, the bus component may be fixed to the electrode terminals of the battery cells 20 by means of welding. Electric energy of the plurality of battery cells 20 may be further led out by means of an electrically conductive structure passing through the case. Optionally, the electrically conductive mechanism may also be a part of the bus component.

Any number of battery cells 20 may be configured according to different power demands. The plurality of battery cells 20 may be connected in series, in parallel or in series-parallel, so as to achieve high capacity or power. Since each battery 10 may include a large number of battery cells 20, and for ease of mounting, the battery cells 20 may be provided in groups, and each group of battery cells 20 forms a battery module. The number of battery cells 20 included in the battery module is not limited and may be set according to demands. The battery may include a plurality of battery modules that may be in series connection, in parallel connection or in series-parallel connection.

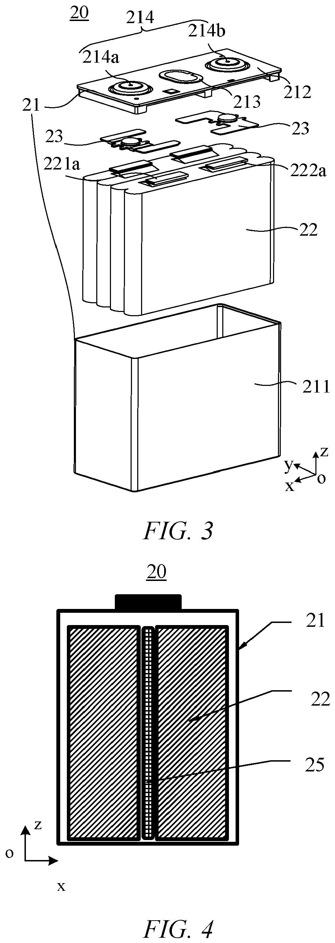

FIG. 3 shows a schematic structural diagram of a battery cell 20 according to an embodiment of the present application. The battery cell 20 includes one or more electrode assemblies 22, a housing 211, and an end cap 212. The housing 211 and the end cap 212 form a shell or a battery box 21. Walls of the housing 211 and the end cap 212 are both referred to as walls of the battery cell 20. For a cuboid battery cell 20, the walls of the housing 211 include a bottom wall and four side walls. The housing 211 may be determined according to the shape of a combination of the one or more electrode assemblies 22. For example, the housing 211 may be a hollow cuboid, cube or cylinder, and one of surfaces of the housing 211 has an opening such that the one or more electrode assemblies 22 can be provided in the housing 211. For example, when the housing 211 is a hollow cuboid or cube, one flat face of the housing 211 is an opening face, i.e., the flat face has no wall, so that the inside and outside of the housing 211 are in communication with each other. When the housing 211 is a hollow cylinder, an end face of the housing 211 is an opening face, i.e., the end face has no wall, so that the inside and outside of the housing 211 are in communication with each other. The end cap 212 covers the opening and is connected to the housing 211 so as to form a closed cavity in which the electrode assembly 22 is placed. The housing 211 is filled with an electrolyte, such as an electrolyte solution.

The battery cell 20 may further include two electrode terminals 214, and the two electrode terminals 214 may be provided on the end cap 212. The end cap 212 is generally in the form of a flat plate, the two electrode terminals 214 are fixed to a flat plate face of the end cap 212, and the two electrode terminals 214 are respectively a positive electrode terminal 214a and a negative electrode terminal 214b. Each electrode terminal 214 is correspondingly provided with a connecting member 23, or referred to as a current collecting member 23, which is located between the end cap 212 and the electrode assembly 22 to implement the electrical connection between the electrode assembly 22 and the electrode terminal 214.

As shown in FIG. 3, each electrode assembly 22 is provided with a first tab 221a and a second tab 222a. The first tab 221a and the second tab 222a have opposite polarities. For example, when the first tab 221a is a positive tab, the second tab 222a is a negative tab. The first tab 221a of the one or more electrode assemblies 22 is connected to an electrode terminal by means of a connecting member 23, and the second tab 222a of the one or more electrode assemblies 22 is connected to another electrode terminal by means of another connecting member 23. For example, the positive electrode terminal 214a is connected to the positive tab by means of a connecting member 23, and the negative electrode terminal 214b is connected to the negative tab by means of another connecting member 23.

In the battery cell 20, according to actual usage requirements, one or more electrode assemblies 22 may be provided. As shown in FIG. 3, four separate electrode assemblies 22 are provided in the battery cell 20.

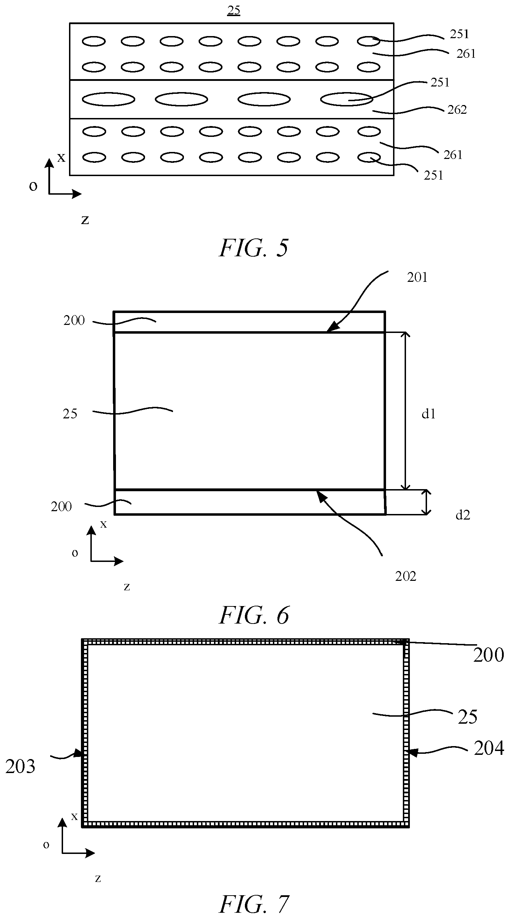

FIG. 4 is a schematic diagram of a battery cell according to an embodiment of the present application, and FIG. 5 is a schematic diagram of a buffer member according to an embodiment of the present application. As shown in FIGS. 4 and 5, the battery cell 20 includes a shell 21, an electrode assembly 22, and a buffer member 25, wherein the electrode assembly 22 is accommodated in the shell 21; the buffer member 25 is accommodated in the shell 21 and connected to the electrode assembly 22, and the buffer member 25 is configured to buffer expansion of the electrode assembly 22; and the buffer member 25 includes first closed pores 251, and the volume V1 of the first closed pores 251 and the volume V of the buffer member 25 meet a formula of V1/V > 10%.

The shell 21 is configured to accommodate the electrode assembly 22 and an electrolyte solution, and the electrode assembly 22 and the electrolyte solution may be enclosed inside the battery cell 20 by the shell 21.

The buffer member 25 is accommodated in the shell 21 and connected to the electrode assembly 22, and the buffer member 25 may be directly connected to the electrode assembly 22 or indirectly connected to the electrode assembly 22. Since the buffer member 25 is arranged inside the battery cell 20, in case of the battery 10 having a constant internal space, the space of the buffer member originally provided between the battery cells 20 in the battery 10 can be assigned to internal spaces of the battery cells 20, which can improve the space utilization of the battery cells 20.

The buffer member 25 is configured to buffer expansion of the electrode assembly 22. The electrode assembly 22 may exert pressure on the buffer member 25 during expansion, and the buffer member 25 may exert a reverse force onto the electrode assembly 22 after being compressed. Under the action the buffer member 25, the surface of the electrode assembly 22 in contact with the buffer member 25 is uniformly stressed; and as the electrode assembly 22 expands, the stress on the surface changes or increases uniformly, which can achieve uniform release of the expansion force of the electrode assembly 22 and in turn reduce or even avoid polarization accumulation of the electrode assembly 22. This avoids the occurrence of lithium precipitation, etc. caused by polarization accumulation, thereby ensuring the safety performance, long-term charge and discharge performance, capacity, etc. of the battery.

The buffer member 25 includes first closed pores 251, and the volume V1 of the first closed pores 251 and the volume V of the buffer member 25 meet a formula of V 1/V > 10%. The volume of the buffer member 25 is the apparent volume of the buffer member 25. For example, in the case where the buffer member 25 is a square buffer member, the volume of the buffer member 25 meets the formula of V = a * b * h, where a is the length of the buffer member 25, b is the width of the buffer member 25, and h is the thickness of the buffer member 25. The volume of the buffer member 25 may also meet a formula of V = V1 + V2 + V5, where V1 is the volume of the first closed pores, V2 is the volume of the material of the buffer member 25, and V5 is the volume of the orifice in the buffer member 25.

The buffer member 25 may be made of foam, silicone rubber, silicone rubber compounded polyurethane, polypropylene, melamine, etc., which is not specifically limited in the embodiments of the present application.

The orifice may be a cavity and channel in communication with the outside, for example, with an electrolyte solution. The surface area of the orifice can be analyzed by a gas adsorption method, and the volume V5 of the orifice can be measured by a gas method according to GB/T21650-2008. The orifice may absorb the electrolyte solution in the battery cell 20. The greater the ratio of the volume V5 of the orifice to the volume V of the buffer member 25, the greater the weight and rate at which the buffer member 25 absorbs the electrolyte solution.

The first closed pores 251 is not in communication with the outer surface of the buffer member 25, and the electrolyte solution in the battery cell 20 cannot enter the first closed pores 251, so that providing the first closed pores 251 can reduce the absorption of the electrolyte solution by the buffer member 25. In addition, providing the first closed pores 251 can also reduce the weight of the buffer member 25. The volume V2 of the first closed pores 251 can be calculated from the volume V of the buffer member 25, the volume V5 of the orifice, and the volume V2 of the material of the buffer member 25.

Compared with a buffer member having no first closed pores 251 or a buffer member in which the volume proportion of the first closed pores 251 is not greater than 10%, in the buffer member 25 according to the present application, the volume percentage of the first closed pores 251 is greater than 10%, and both the rate at which the buffer member 25 absorbs the electrolyte solution and the weight of the absorbed electrolyte solution may become smaller, which can thus ensure the content of the free electrolyte solution in the battery cell 20. In this way, in one aspect, it is possible to avoid the occurrence of insufficient lithium intercalation, lithium precipitation, etc. in a local region of a negative electrode during formation or full charging, which can thus ensure the safety performance of the battery 10; in another aspect, no additional electrolyte solution is needed, so that it is possible to avoid the increase in the weight of the battery cell 20 caused by the increase of the electrolyte solution, which can not only ensure the energy density of the battery 10, but also save the space to accommodate the gas generated during the use of the battery cell 20; and in yet another aspect, the first closed pores 251 are not in contact with the electrolyte solution, so that it is possible to reduce the area of reaction between the buffer member 25 and the electrolyte solution, which can reduce side reactions, avoid damage to the buffer member 25, and ensure the buffering effect of the buffer member 25.

Optionally, in an embodiment of the present application, the volume V1 of the first closed pores 251 and the volume V of the buffer member 25 also meet a formula of V1/V ≥ 30%. This can further reduce the absorption of the electrolyte solution by the buffer member 25, and can also reduce the weight of the buffer member 25 and in turn improve the energy density of the battery 10.

Optionally, in an embodiment of the present application, the volume V1 of the first closed pores 251 and the volume V of the buffer member 25 also meet a formula of (V1 + V2)/V ≥ 50%, where V2 is the volume of the material of the buffer member 25. The volume of the material of the buffer member 25 meets a formula of V2 = m/ρ, where m is the weight of the buffer member 25, and ρ is the density of the material itself. In this way, the ratio of the volume V5 of the orifice in the buffer member 25 to the volume V of the buffer member 25 is less than 50%, which can further reduce the absorption of the electrolyte solution by the orifice.

Optionally, in an embodiment of the present application, as shown in FIG. 5, the buffer member 25 includes a first layer 261 and a second layer 262, the first layer 261 being closer to the electrode assembly 22 than the second layer 262, and the first density ρ1 of the first layer 261 being greater than the second density ρ2 of the second layer 262.

The first density meet a formula of ρ1 = m4/v4, and the second density meet a formula of ρ2 = m5/v5, where m4 and v4 are respectively the weight and the volume of the first layer 261, and m5 and v5 are respectively the weight and the volume of the second layer 262. The volume of the first layer 261 may be the apparent volume of the first layer 261, that is, a product of the length, width and height of the first layer 261. Similarly, the volume of the second layer 262 may be the apparent volume of the second layer 261.

The first density ρ1 of the first layer 261 is greater than the second density ρ2 of the second layer 262, the electrolyte solution absorbed by the first layer 261 is less than that absorbed by the second layer 262, and the weight per unit volume of the second layer 262 is less than that of the first layer 261. In this way, it is possible to ensure that both the amount of the electrolyte solution absorbed by the buffer member 25 and the weight of the buffer member 25 are within reasonable ranges, which can not only avoid loss of free electrolyte solution, but also improve the energy density of the battery.

The first layer 261 is closer to the electrode assembly 22 than the second layer 262, and the second layer 262 is compressed relative to the first layer 261. In this way, in a later stage of expansion of the electrode assembly 22, the electrolyte solution in the second layer 262 is squeezed out of the second layer and becomes the free electrolyte solution, which further meets the demand of the electrode assembly 22 for the electrolyte solution.

By providing the buffer member 25 with differentiated densities, both the demand of the buffer member 25 for the weight and the demand of the electrode assembly 22 for the electrolyte solution can be satisfied.

Optionally, in an embodiment of the present application, the first density ρ1 and the second density ρ2 meet a formula of ρ1/ρ2 ≥ 1.05. In this way, the ratio of the first density ρ1 to the second density ρ2 is within a reasonable range, and there is a significant density difference between the first layer and the second layer of the buffer member, which can better satisfy the demand of the buffer member for the weight and the demand of the electrode assembly for the electrolyte solution.

Optionally, in an embodiment of the present application, the volume ratio of the first closed pores 251 in the first layer 261 to the first layer 261 is greater than the volume ratio of the first closed pores 251 in the second layer 262 to the second layer 262. In this way, the second layer 262 can absorb more electrolyte solution than the first layer 261, and after the second layer 262 is compressed, the second layer 262 may release more electrolyte solution to further meet the demand of the electrode assembly 22 for the electrolyte solution.

Optionally, in an embodiment of the present application, the second layer 262 is arranged between the two first layers 261. In this way, force is applied more uniformly throughout the buffer member 25, which facilitates uniform release of the electrolyte solution.

FIG. 6 is a schematic diagram of a buffer member provided with a protective layer according to an embodiment of the present application. Optionally, in an embodiment of the present application, as shown in FIG. 6, a surface of the buffer member 25 is provided with a protective layer 200. This can prevent damage to an outer surface of the buffer member 25, the outer surface of the buffer member 25 being a surface of the buffer member 25 in contact with the electrolyte solution.

Optionally, in an embodiment of the present application, as shown in FIG. 6, the protective layer 200 is arranged on a first surface 201 and a second surface 202 of the buffer member 25, the first surface 201 and the second surface 202 being surfaces arranged opposite to each other in a thickness direction of the buffer member 25. The thickness direction of the buffer member 25 may be the x-direction in the figures, and the first surface 201 and the second surface 202 are arranged opposite to each other in the x-direction. The first surface 201 and the second surface 202 are surfaces of the buffer member 25 having the largest surface area, and providing the protective layer on the first surface 201 and the second surface 202 is simple in process and convenient to operate. In other embodiments, the protective layer 200 may also be provided on only one of the first surface 201 and the second surface 202, which is specifically arranged according to actual needs and is not specifically limited in the embodiments of the present application.

FIG. 7 is a schematic diagram of a buffer member provided with a protective layer according to an embodiment of the present application. Optionally, in an embodiment of the present application, as shown in FIG. 7, the protective layer 200 is arranged on a third surface 203 and a fourth surface 204 of the buffer member 25, the third surface 203 and the fourth surface 204 being surfaces arranged opposite to each other in a direction perpendicular to the thickness direction of the buffer member 25, and both the third surface 203 and the fourth surface 204 being connected to the first surface 201 and the second surface 202. The third surface 203 and the fourth surface 204 may be surfaces arranged opposite to each other in a z-direction. In this way, the first surface 201, the second surface 202, the third surface 203 and the fourth surface 204 of the buffer member 25 are all provided with the protective layers, so that the buffer member 25 can be protected more comprehensively.

Optionally, in an embodiment of the present application, the protective layer 200 has a thickness of 1 µm to 5000 µm. In the case where the thickness of the protective layer 200 is less than 1 µm, the production of the protective layer 200 requires a higher control precision, resulting in a higher production cost; and in the case where the thickness of the protective layer 200 is greater than 5000 µm, more internal space of the battery cell 20 may be occupied, which is not conducive to improving the space utilization of the battery cell 20. By setting the thickness of the protective layer 200 to be 1 µm to 5000 µm, both the production cost and the internal space utilization of the battery cell 20 can be satisfied.

Optionally, in an embodiment of the present application, the thickness d1 of the protective layer 200 and the thickness d2 of the buffer member 25 meet a formula of d1/(d1 + d2) ≤ 50%. This can avoid weakening of the buffering effect of the buffer member 25 caused by excessive thickness of the protective layer 200.

Optionally, in an embodiment of the present application, the protective layer 200 is a coating layer coated onto a surface of the buffer member 25. The coating layer can prevent the gas from escaping from the inside of the buffer member 25, and can also isolate the buffer member 25 from corrosion by the electrolyte solution.

Optionally, in an embodiment of the present application, a wetting force r1 between a surface of the buffer member 25 provided with no coating layer and the electrolyte solution, and a wetting force r2 between the coating layer and the electrolyte solution meet a formula of r1/r2 ≥ 1.02, where r2 = L2/2, r1 = L1/2, L1 is a diffusion distance of the electrolyte solution on the surface of the buffer member 25 provided with no coating layer within a preset time, and L2 is a diffusion distance of the electrolyte solution on the coating layer within the preset time.

In this way, due to the difference of wetting force between the coating layer and the electrolyte solution, it is possible to reduce the ability of the buffer member 25 to absorb the electrolyte solution, and avoid occurrence of insufficient lithium intercalation, lithium precipitation, etc. in a local region of a negative electrode caused by insufficient electrolyte solution.

A testing method for the wetting force includes the steps of taking a fixed volume of an electrolyte solution by using a capillary tube, placing the capillary tube perpendicular to the surface of a test object, with a vertical distance between the bottom of the capillary tube and the test object being H, releasing the electrolyte solution inside the capillary tube, allowing infiltration with the electrolyte solution for a preset time, and reading a diffusion distance of the electrolyte solution on the surface of the test object within the preset time by using a measuring tape.

Optionally, the material of the protective layer 200 may include an inert material and an adhesive. The inert material may be aluminum oxide, zirconium oxide, silicon oxide, etc., and the adhesive may be styrene butadiene rubber (SBR), polyvinylidene fluoride (PVDF), resin, etc. The inert material may be mixed with the adhesive and then coated onto the surface of the buffer member 25, or may be formed on the surface of the buffer member 25 in other ways, which is not specifically limited in the embodiments of the present application.

Optionally, the material of the protective layer 200 may include an inert material which may be one or more of an aminated phenol polymer, a cationic or anionic polymer, a chitosan derivative, a reactant of polyester or acrylic polyol and isocyanate, bisphenol A, bisphenol F epoxy resin, polyvinyl alcohol, etc.

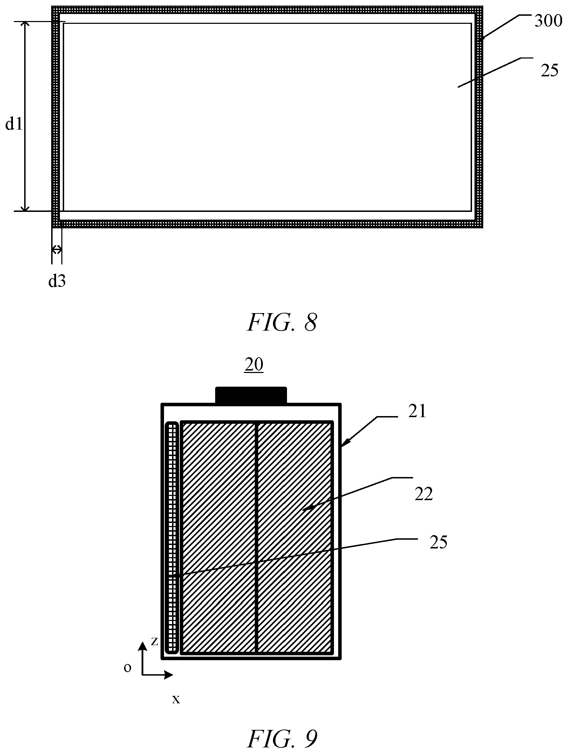

FIG. 8 is a schematic diagram of a buffer member provided with a protective shell according to an embodiment of the present application. Optionally, in an embodiment of the present application, as shown in FIG. 8, the protective layer 200 is a protective shell 300 surrounding the buffer member 25. The protective shell 300 may include an aluminum-plastic film, a polyethylene terephthalate (PET) film, etc.

Optionally, in an embodiment of the present application, as shown in FIG. 8, the thickness d3 of the protective shell 300 and the thickness d1 of the buffer member 25 meet a formula of d3/d1 ≤ 50%. This can avoid a reduction in the buffering effect of the buffer member 25 and a reduction in the internal space utilization of the battery cell 20 caused by excessive thickness of the protective shell 300.

Optionally, in an embodiment of the present application, the protective shell 300 includes second closed pores, and the volume V3 of the second closed pores and the volume V4 of the protective shell 300 meet a formula of V3/V4 ≥ 90%. This is conducive to forming a closed space inside the protective shell 300, which further reduces or even avoids absorption of the electrolyte solution by the buffer member 25. In some embodiments, a space with a closed porosity of 100% may be formed inside the protective shell 300 to achieve zero absorption of the electrolyte solution by the buffer member 25.

FIGS. 9 to 11 are schematic diagrams of a battery cell according to an embodiment of the present application. Optionally, in an embodiment of the present application, as shown in FIGS. 9 to 11, the buffer member 25 is arranged between the electrode assembly 22 and the shell 21, and/or, the buffer member 25 is arranged between the adjacent electrode assemblies 22.

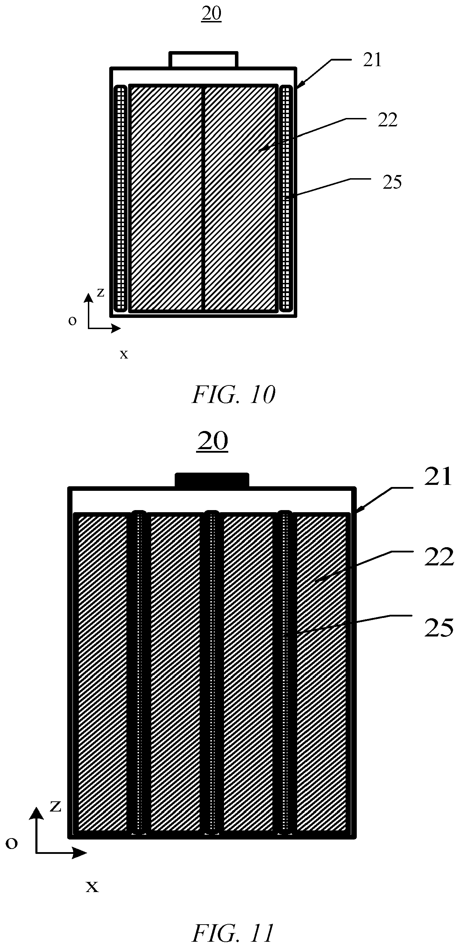

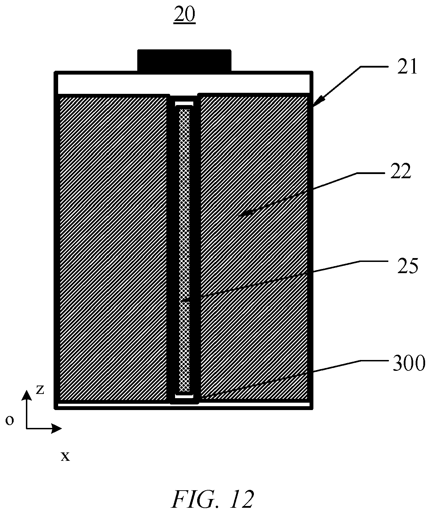

As shown in FIGS. 9 and 10, the buffer member 25 is arranged between the electrode assembly 22 and the shell 21, and the buffer member 25 may be placed asymmetrically as shown in FIG. 9 or symmetrically as shown in FIG. 10. As shown in FIG. 11, the buffer member 25 is arranged between the adjacent electrode assemblies 22. FIG. 12 is a schematic diagram of a battery cell according to an embodiment of the present application, and as shown in FIG. 12, the surface of the buffer member 25 between the adjacent electrode assemblies 22 is further provided with the protective shell 300. The specific position of the buffer member 25 and the protective layer on the surface of the buffer member 25 may be specifically set according to actual needs, which is not specifically limited in the embodiments of the present application.

Experiments were conducted using the buffer member 25 in the embodiments of the present application, with the data being shown in Table 1. An external buffer member is a buffer member placed outside the battery cell, and an internal buffer member is the buffer member placed inside the battery cell 20 according to the embodiments of the present application. As can be seen from Comparative example 1 and Example 1, and Comparative example 2 and Example 7, placing the buffer member inside the battery cell can significantly improve the capacity retention rate of the battery cell and reduce the expansion force. As can be seen from Examples 1, 2 and 3, increasing the thickness of the buffer member is conducive to improving the capacity retention rate of the battery cell and reduce the expansion force. As can be seen from Examples 1, 5 and 6, the larger r1/r2 is, the more favorable it is to improve the capacity retention rate of the battery cell and reduce the expansion force.

It should be understood that relevant parts in the embodiments of the present application may be referred to each other and will not be repeated for the sake of brevity.

An embodiment of the present application further provides a battery 10, the battery 10 may include a battery cell 20 according to the foregoing embodiments and a case 11, and the case 11 is configured to accommodate the battery cell 20.

An embodiment of the present application further provides a power consuming device which may include a battery 10 according to the foregoing embodiment, and the battery 10 is configured to power the power consuming device. Optionally, the power consuming device may be a vehicle 1, a ship, a spacecraft, etc., which is not limited in the embodiments of the present application.

The battery 10 and the power consuming device according to the embodiments of the present application are described above, and a method and device for manufacturing a battery according to the embodiments of the present application will be described below. For the parts not described in detail, reference can be made to the foregoing embodiments.

**Table 1 Impact of buffer member on battery cell**

| | Battery type | Batte ry Capa city (Ah) | Thicknes s (mm) of external buffer member | Thicknes s (mm) of internal buffer member | Thickn ess (mm) of protect ive layer | Wettin g force (r1/r2) | Capacity retention rate after 1000 cycles | Expansi on force N after 1000 cycles |
|---|---|---|---|---|---|---|---|---|
| Comparati ve example 1 | Ternary lithium-ion battery | 60 | 2.0 mm | None | None | None | 81.3% | 10000 |
| Example 1 | Ternary lithium-ion battery | 60 | None | 1 | None | None | 85.4% | 8980 |
| Example 2 | Ternary lithium-ion battery | 60 | None | 1.5 | None | None | 89.9% | 7860 |
| Example 3 | Ternary lithium-ion battery | 60 | None | 2.0 | None | None | 95.8% | 3680 |
| Example 5 | Ternary lithium-ion battery | 60 | None | 1 | 0.2 | 1.03 | 87.3% | 8610 |
| Example 6 | Ternary lithium-ion battery | 60 | None | 1 | 0.2 | 1.10 | 88.1% | 8420 |
| Comparati ve example 2 | Lithium iron phosphate battery | 40 | 1.5 | None | None | None | 90.5% | 8000 |
| Example 7 | Lithium iron phosphate battery | 40 | None | 1.5 | None | None | 92.5% | 5350 |

An embodiment of the present application further provides a method for manufacturing a battery cell 20, the method including: providing a shell 21; providing an electrode assembly 22, the electrode assembly 22 being accommodated in the shell 21; and providing a buffer member 25, the buffer member 25 being accommodated in the shell 21 and connected to the electrode assembly 22, and the buffer member 25 being configured to buffer expansion of the electrode assembly 22, wherein the buffer member 22 includes first closed pores 251, and the volume V1 of the first closed pores 251 and the volume V of the buffer member 25 meet a formula of V1/V > 10%.

An embodiment of the present application further provides a device for manufacturing a battery 10, the device including: a first provision module configured to provide a shell 21; a second provision module configured to provide an electrode assembly 22, the electrode assembly 22 being accommodated in the shell 21; and a third provision module configured to provide a buffer member 25, the buffer member 25 being accommodated in the shell 21 and connected to the electrode assembly 22, and the buffer member 25 being configured to buffer expansion of the electrode assembly 22, wherein the buffer member 22 includes first closed pores 251, and the volume V1 of the first closed pores 251 and the volume V of the buffer member 25 meet a formula of V1/V > 10%.

Although the present application has been described with reference to the preferred embodiments, various modifications can be made, and equivalents can be provided to substitute for the components thereof without departing from the scope of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A battery cell, comprising:
a shell (21);
an electrode assembly (22), the electrode assembly (22) being accommodated in the shell (21); and
a buffer member (25), the buffer member (25) being accommodated in the shell (21) and connected to the electrode assembly (22), and the buffer member (25) being configured to buffer expansion of the electrode assembly (22),
wherein the buffer member (25) comprises first closed pores (251), and the volume V1 of the first closed pores (251) and the volume V of the buffer member (25) meet a formula of V1/V > 10%.

2. The battery cell according to claim 1, wherein the volume V1 of the first closed pores (251) and the volume V of the buffer member (25) also meet a formula of V1/V ≥ 30%.

3. The battery cell according to claim 1 or 2, wherein the volume V1 of the first closed pores (251) and the volume V of the buffer member (25) also meet a formula of (V1 + V2)/V ≥ 50%, where V2 is the volume of a material of the buffer member (25).

4. The battery cell according to any one of claims 1 to 3, wherein the buffer member (25) comprises first layers (261) and a second layer (262), the first layer (261) being closer to the electrode assembly (22) than the second layer (262), and a first density of the first layer (261) being greater than a second density of the second layer (262).

5. The battery cell according to claim 4, wherein the first density ρ1 and the second density ρ2 meet a formula of ρ1/ρ2 ≥ 1.05.

6. The battery cell according to claim 4 or 5, wherein a volume ratio of the first closed pores (251) in the first layer (261) to the first layer (261) is greater than a volume ratio of the first closed pores (251) in the second layer (262) to the second layer (262).

7. The battery cell according to any one of claims 4 to 6, wherein the second layer (262) is arranged between the two first layers (261).

8. The battery cell according to any one of claims 1 to 7, wherein a surface of the buffer member (25) is provided with a protective layer (200).

9. The battery cell according to claim 8, wherein the protective layer (200) is arranged on a first surface (201) and a second surface (202) of the buffer member (25), the first surface (201) and the second surface (202) being surfaces arranged opposite to each other in a thickness direction of the buffer member (25).

10. The battery cell according to claim 9, wherein the protective layer (200) is arranged on a third surface (203) and a fourth surface (204) of the buffer member (25), the third surface (203) and the fourth surface (204) being surfaces arranged opposite to each other in a direction perpendicular to the thickness direction of the buffer member (25), and the third surface (203) and the fourth surface (204) being both connected to the first surface (201) and the second surface (202).

11. The battery cell according to any one of claims 8 to 10, wherein the protective layer (200) has a thickness of 1 µm to 5000 µm.

12. The battery cell according to any one of claims 8 to 11, wherein the thickness d1 of the protective layer (200) and the thickness d2 of the buffer member (25) meet a formula of d1/(d1 + d2) ≤ 50%.

13. The battery cell according to any one of claims 8 to 12, wherein the protective layer (200) is a coating layer coated onto a surface of the buffer member (25).

14. The battery cell according to claim 13, wherein a wetting force r1 between a surface of the buffer member (25) provided with no coating layer and an electrolyte solution, and a wetting force r2 between the coating layer and the electrolyte solution meet a formula of r1/r2 ≥ 1.02, where r2 = L2/2, r1 = L1/2, L1 is a diffusion distance of the electrolyte solution on the surface of the buffer member (25) provided with no coating layer within a preset time, and L2 is a diffusion distance of the electrolyte solution on the coating layer within the preset time.

15. The battery cell according to claim 8, wherein the protective layer (200) is a protective shell (300) surrounding the buffer member (25).

16. The battery cell according to claim 15, wherein the thickness d3 of the protective shell (300) and the thickness d1 of the buffer member (25) meet a formula of d3/d1 ≤ 50%.

17. The battery cell according to claim 15 or 16, wherein the protective shell (300) comprises second closed pores, and the volume V3 of the second closed pores and the volume V4 of the protective shell (300) meet a formula of V3/V4 ≥ 90%.

18. The battery cell according to any one of claims 1 to 17, wherein the buffer member (25) is arranged between the electrode assembly (22) and the shell (21), and/or the buffer member (25) is arranged between the adjacent electrode assemblies (22).

19. A battery, comprising:
a battery cell according to any one of claims 1 to 18; and
a case configured to accommodate the battery cell.

20. A power consuming device, comprising: a battery according to claim 19.
